(19) Europäisches Patentamt / European Patent Office / Office européen des brevets

(11) **EP 0 874 307 B2**

(12) **NEW EUROPEAN PATENT SPECIFICATION**

After opposition procedure

(45) Date of publication and mention
of the opposition decision:
**28.12.2016 Bulletin 2016/52**

(45) Mention of the grant of the patent:
**14.01.2009 Bulletin 2009/03**

(21) Application number: **98302286.4**

(22) Date of filing: **25.03.1998**

(51) Int Cl.:
**G06F 7/72** *(2006.01)*

(54) **Accelerated finite field operations on an elliptic curve**

Beschleunigte Finite-Feld-Operationen auf einer elliptischen Kurve

Opérations accélérées dans un corps fini sur une courbe elliptique

(84) Designated Contracting States:
**CH DE FR GB LI**

(30) Priority: **25.03.1997 GB 9706150
20.06.1997 GB 9713138**

(43) Date of publication of application:
**28.10.1998 Bulletin 1998/44**

(60) Divisional application:
**02077593.8
07075591.3**

(73) Proprietor: **Certicom Corp.
Mississauga, Ontario L4W 0B5 (CA)**

(72) Inventors:
• **Vanstone, Scott A.
Waterloo,
Ontario N2T 2H4 (CA)**
• **Mullin, Ronald C.
Waterloo,
Ontario N2L 4R9 (CA)**
• **Antipa, Adrian
Mississauga,
Ontario L4Z 3R3 (CA)**
• **Gallant, Robert
Mississuga,
Ontario L5M 5N1 (CA)**

(74) Representative: **Moore, Barry et al
Hanna Moore + Curley
Garryard House
25/26 Earlsfort Terrace
Dublin 2, D02 PX51 (IE)**

(56) References cited:
**WO-A-96/04602**

• **MENEZES A J ET AL: "Elliptic curve cryptosystems and their implementation" JOURNAL OF CRYPTOLOGY, AUTUMN 1993, USA, vol. 6, no. 4, ISSN 0933-2790, pages 209-224, XP002069135**
• **AGNEW G B ET AL: "AN IMPLEMENTATION OF ELLIPTIC CURVE CRYPTOSYSTEMS OVER F/2\155" IEEE JOURNAL ON SELECTED AREAS IN COMMUNICATIONS, vol. 11, no. 5, 1 June 1993, pages 804-813, XP000399849**

EP 0 874 307 B2

**Description**

This invention relates to a method of accelerating operations in a finite field, and in particular, to operations performed in a field $F_{2m}$ such as used in encryption systems.

**BACKGROUND OF THE INVENTION**

Finite fields of characteristic two in $F_{2m}$ are of interest since they allow for the efficient implementation of elliptic curve arithmetic. The field $F_{2m}$ can be viewed as a vector space of dimension m over $F_2$. Once a basis of $F_{2m}$ over $F_2$ has been chosen the elements of $F_{2m}$ can be conveniently represented as vectors of elements zero or one and of length $m$. In hardware, a field element is stored in a shift register of length $m$. Addition of field elements is performed by bitwise XOR-ing ($\oplus$) the vector representations and takes one clock cycle.

Digital signatures are used to confirm that a particular party has sent a message and that the contents have not been altered during transmission.

A widely used set of signature protocols utilizes the ElGamal public key signature scheme that signs a message with the sender's private key. The recipient may then verify the signature with the sender's public key.

Various protocols exist for implementing such a scheme and some have been widely used. In each case however the recipient is required to perform a computation to verify the signature Where the recipient has adequate computing power this does not present a particular problem but where the recipient has limited computing power, such as in a "Smart card " application, the computations may introduce delays in the verification process. Public key schemes may be implemented using one of a number of groups in which the discrete log problem appears intractable but a particularly robust implementation is that utilizing the characteristics of points on an elliptic curve over a finite field. This implementation has the advantage that the requisite security can be obtained with relatively small orders of field compared with for example with implementations in $Z_p{}^*$ and therefore reduces the bandwidth required for communicating the signatures.

In a typical implementation a signature component s has the form:

$$s = ae + k \pmod{n}$$

where:

P is a point on the curve, which is a predefined parameter of the system;
k is a random integer selected as a short term private or session key, and has a corresponding short term public key R = kP;
a is the long term private key of the sender and has a corresponding public key aP = Q;
e is a secure hash, such as the SHA hash function, of a message m and short term public key R; and
n is the order of the curve.

The sender sends to the recipient a message including m, s, and R and the signature is verified by computing the value R' = (sP-eQ) which should correspond to R. If the computed values are equivalent then the signature is verified.

In order to perform the verification it is necessary to compute a number of point multiplications to obtain sP and eQ, each of which is computationally complex.

If $F_q$ is a finite field, then elliptic curves over $F_q$ can be divided into two classes, namely supersingular and non-supersingular curves. If $F_q$ is of characteristic 2, i.e. $q = 2^M$, then the classes are defined as follows.

i) The set of all solutions to the equation $y^2 + ay = x^3 + bx + c$ where $a,b,c \in F_q$, $a \neq 0$, together with a special point called the point at infinity O is a supersingular curve over $F_q$.
ii) The set of all solutions to the equation $y^2 + xy = x^3 + ax^2 + b$ where $a, b \in F_q$, $b \neq 0$, together with a special point called the point at infinity O is a nonsupersingular curve over $F_q$.

By defining an appropriate addition on these points, we obtain an additive abelian group. The addition of two points $P(x_1, y_1)$ and $Q(x_2, y_2)$ for the supersingular elliptic curve E with $y^2 + ay = x^3 + bx + c$ is given by the following:-

If $P = (x_1, y_1) \in E$; then define $- P = (x_1, y_1 + a)$, $P + O = O + P = P$ for all $P \in E$.

If $Q = (x_2, y_2) \in E$ and $Q \neq - P$, then the point representing the sum of $P + Q$, is denoted $(x_3, y_3)$, where

$$x_3 = \left\{ \left( \frac{y_1 \oplus y_2}{x_1 \oplus x_2} \right)^2 \oplus x_1 \oplus x_3 \quad (P \neq Q) \right.$$

or

$$x_3 = \left\{ \frac{x_1^4 \oplus b^2}{a^2} \quad (P = Q) \right.$$

and

$$y_3 = \left\{ \left( \frac{y_1 \oplus y_2}{x_1 \oplus x_2} \right) \oplus (x_1 \oplus x_3) \oplus y_1 \oplus a \right. \quad (P \neq Q)$$

or

$$y_3 = \left\{ \left( \frac{x_1^2 \oplus b}{a} \right) \oplus (x_1 \oplus x_3) \oplus y_1 \oplus a \right. \quad (P = Q)$$

The addition of two points $P(x_1, y_1)$ and $Q(x_2, y_2)$ for the nonsupersingular elliptic curve $y^2 + xy = x^3 + ax^3 + b$ is given by the following:-

If $P = (x_1, y_1) \in E$ then define $- P = (x_1, y_1 + x_1)$. For all $P \in E$, $O + P = P + O = P$. IF $Q \neq (x_2, y_2) \in E$ and $Q + - P$, then $P + Q$ is a point $(x_3, y_3)$, where

$$x_3 = \left\{ \left( \frac{y_1 \oplus y_2}{x_1 \oplus x_2} \right)^2 \oplus \frac{y_1 \oplus y_2}{x_1 \oplus x_2} \oplus x_1 \oplus x_2 \oplus a \right. \quad (P \neq Q)$$

or

$$x_3 = \left\{ x_1^2 \oplus \frac{b}{x_1^2} \right. \quad (P = Q)$$

and

$$y_3 = \left\{ \left( \frac{y_1 \oplus y_1}{x_1 \oplus x_1} \right) \oplus (x_1 \oplus x_1) \oplus x_1 \oplus y_1 \right. \quad (P \neq Q)$$

or

$$y_3 = \left\{ x_1^2 \oplus \left( x_1 \oplus \frac{y_1}{x_1} \right) \oplus x_3 \oplus x_3 \right. \quad (P = Q)$$

Now supersingular curves are preferred, as they are more resistant to the MOV attack. It can be seen that computing the sum of two points on $E$ requires several multiplications, additions, and inverses in the underlying field $F_{2m}$. In turn, each of these operations requires a sequence of elementary bit operations.

When implementing cryptographic operations in ElGamal or Diffie-Hellman schemes or generally most cryptographic operations with elliptic curves, one is required to compute $kP = P + P... + P$ ($P$ added $k$ times) where $k$ is a positive integer and $P \in E$. This requires the computation of $(x_3, y_3)$ to be computed k-1 times. For large values of $k$ which are typically necessary in cryptographic applications, this has previously been considered impractical for data communication if $k$ is large, for example 1024 bits, $kP$ would be calculated by performing $2^{1024}$ additions of $P$.

Furthermore, in a multiplicative group, multiplications and inversions are extremely computationally intensive, with field inversions being more expensive than field multiplications. The inversion operation needed when adding two points can be eliminated by resorting to projective coordinates. The formula for addition of two points however, requires a larger number of multiplications than is required when using affine coordinates.

In a paper entitled "Elliptic Curve Cryptosystems and Their Implementation" by Vanstone et al., published in The Journal of Cryptology, Autumn 1993, USA, Vol. 6, No. 4, SSSN 0933-2790, pages 209-224, a method is described for adding two points by converting to projective coordinates and thus eliminating the inversion computation. However, the overall gain in speed by elimination of the inversion is at the expense of space. Extra registers are required to store P and Q and also to store intermediate results when doing the addition. Furthermore, this method requires the use of the y-coordinate in the calculation.

Further examples are given in WO-A-96/04602 and in IEEE Journal on Selected Areas in Communications, Vol. 11, No. 5, 1 June 1993, pages 804-813.

## SUMMARY OF THE INVENTION

It is therefore an object of the present invention to provide a method and apparatus in which some of the above disadvantages are obviated or mitigated.

It is a further object of the invention to provide a method of multiplying finite field elements by a scalar, and which may be implemented relatively efficiency on a processor with limited processing capability, such as a smart card or the like.

It is a still further object of the present invention to provide a method and apparatus in which signature verification may be accelerated in elliptic curve encryption systems.

Furthermore, the inventors have implemented a method whereby computation of a product kP can be performed without the use of the y coordinate of the point P during computation.

Aspects of the present invention are set out in the appended claims.

## BRIEF DESCRIPTION OF THE DRAWINGS

Embodiments of the present invention will now be described by way of example only with reference to the accompanying drawings in which: -

Figure 1 is a schematic representation of a data communication system;
Figure 2 is a schematic diagram of an encryption/decryption unit;
Figure 3 is a flow chart for computing a multiple of a point;
Figure 4 is a flow chart showing the extraction of an y-coordinate;
Figure 5 is an illustration of an embodiment of the present invention.

## DETAILED DESCRIPTION OF A PREFERRED EMBODIMENT

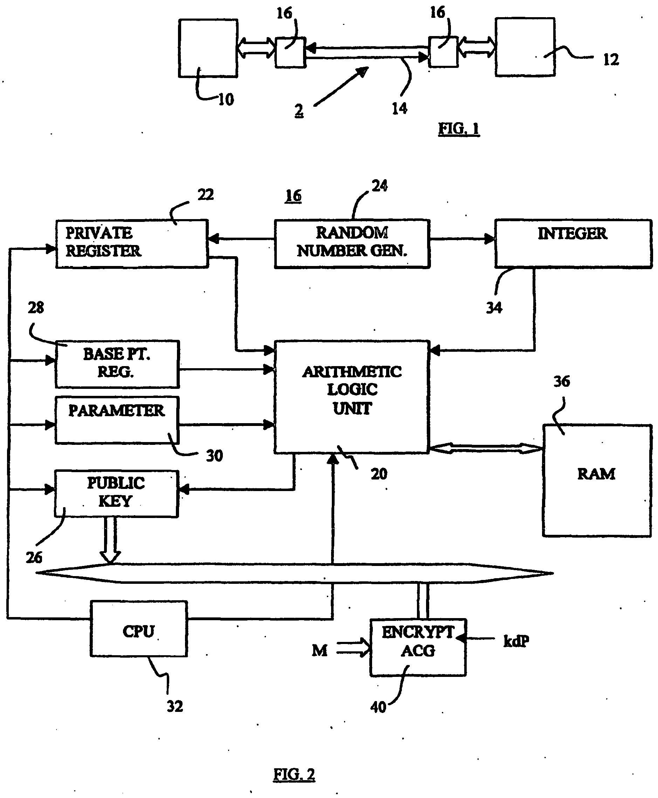

Referring to Figure 1, a data communication system 2 includes a pair of correspondents, designated as a sender 10, and a recipient 12, connected via a communication channel 14. Each of the correspondents 10, 12 includes an encryption/decryption unit 16 associated therewith that may process digital information and prepare it for transmission through the channel 14 as will be described below. The encryption/decryption units implement amongst, others key exchange protocols and an encryption/decryption algorithm.

The module 16 is shown schematically in Figure 2 and includes an arithmetic logic unit 20 to perform the computations including key exchange and generation. A private key register 22 contains a private key, d, generated for example as a 155 bit data string from a random number generator 24, and used to generate a public key stored in a public key register 26. A base point register 28 contains the co-ordinates of a base point P that lies in the elliptic curve selected with each co-ordinate (x, y), represented as a 155 bit data string. Each of the data strings is a vector of binary digits with each digit being the coefficient of an element of the finite field in the normal basis representation of the co-ordinate.

The elliptic curve selected will have the general form $y^2 + xy = x^3 + ax^2 + b$ and the parameters of that curve, namely the coefficients a and b are stored in a parameter register 30. The contents of registers 22, 24, 26, 28, 30 may be transferred to the arithmetic unit 20 under control of a CPU 32 as required

The contents of the public key register 26 are also available to the communication channel 14 upon a suitable request being received. In the simplest implementation, each encryption module 16 in a common secure zone will operate with the same curve and base point so that the contents of registers 28 and 30 need not be accessible. If further sophistication is required, however, each module 16 may select its own curve and base point in which case the contents of registers 28, 30 have to be accessible to the channel 14.

The module 16 also contains an integer register 34 that receives an integer k, the session seed, from the generator 24 for use in encryption and key exchange. The module 16 has a random access memory (RAM) 36 that is used as a temporary store as required during computations

In accordance with a general embodiment, the sender assembles a data string, which includes amongst others, the public key Q of the sender, a message m, the senders short term public key R and a signature component s of the sender. When assembled the data string is sent over the channel 4 to the intended recipient 12

For simplicity it will be assumed that the signature components of the sender 12 is of the form s = ae + k (mod n) as discussed above although it will be understood that other signature protocols may be used. To verify the signature sP-eQ must be computed and compared with R.

Thus a first step of the recipient is to retrieve the value of Q from the string. A hash value e may also be computed from the message m and the coordinates of the point R. The recipient is then able to perform the verification by computing sP and eQ.

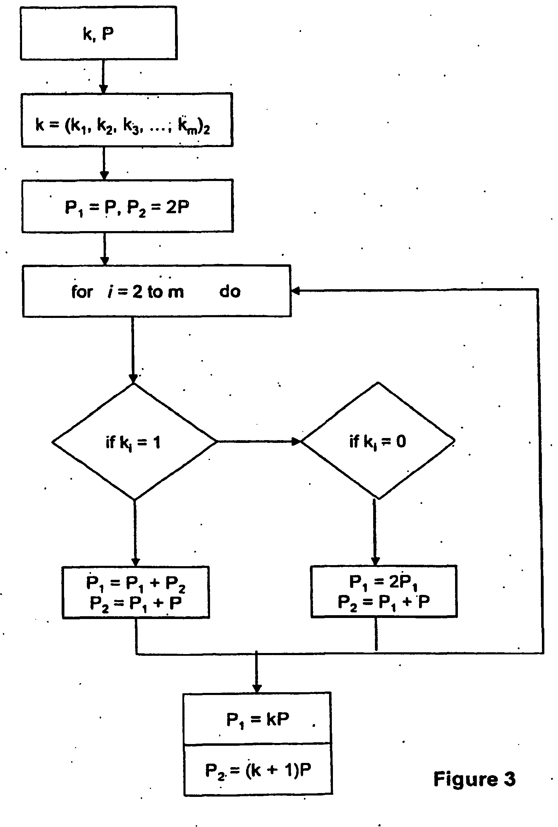

In order to accelerate the calculation of sP or eQ the recipient may adopt the following to calculate the coordinates of the new point sP, in order to avoid performing the several multiplications, additions and inverses in the underlying field $F_{2^m}$. The recipient may calculate sP by resorting to the expedient of a "double and add" method as shown in figure 3.

Referring to figure 3 one embodiment of the invention using the "double and add" method mentioned above in the context of the Vanstone et al reference for multiplication a point $P$ on an elliptic curve $E$ by a value $k$ (102) in order to derive a point $kP$ is implemented by initially representing $k$ in its binary form (104). Next a successive series of point pairs $(mP, (m+1)P)$ are set up (106). Each successive digit of $k$ is considered in turn (108), upon the occurrence of a zero value digit in the binary representation of $k$(114), the first of the pair of points is doubled and P is added to the first of the pair to obtain the second of the pair of points i.e. compute (2mP,(2m+1)P) from (mP,(m+1)P) (116). Alternatively upon the occurrence of a one value in the binary representation of $k$ (110), the first of the pair is formed from the sum of the previous pair of points and the second of the pair is formed by adding P to the first of the pair i.e. compute ((2m+1)P, (2m+2)P) from (mP,(m+1)P) (112).

This is illustrated in the following short example: in which $k$ = 23. The value of $k$ may be represented in binary as pairs (10111). Applying the above rule to a pair of points $(P, 2P)$ we get the successive sequence of point, $(2P, 3P)$; $(5P, 6P)$; $(11P, 12P)$; and finally $(23P, 24P)$. The first of the pair is thus the required point (118).

Thus, it may be seen the final result $23P$ is obtained by performing a series of "double and add" operations on a pair of points in the field wherein the pair of points in a given pair differ by P. Furthermore the number of double and add" operations equals at most one less than the number of bits in $k$ i.e. $(m - 1)$ times. This method of "double and add" has a distinct advantage for large values of $k$ in reducing the number of operations to be performed by a processor. This may be contrasted with performing $k$ double and adds on a single point P as described earlier in the background of the invention.

Turning back to the calculation of sP and eQ, the recipient may thus apply the above embodiment to calculating sP for the nonsupersingular elliptic curve $y^2 + xy = x^3 + ax^2 + b$, $E$ defined over $F_{2m}$.

If $P_1 = (x_1, y_1)$ and $P_2 = (x_2, y_2)$, $P_1 \neq \pm P_2$, are points on the curve E then we can define $P_1 + P_2 = (x_3, y_3)$ where,

$$x_3 = \lambda^2 + \lambda + x_1 + x_2 + a$$

$$(1)$$

wherein the slope of the curve is given by:

$$\lambda = \frac{y_2 + y_1}{x_2 + x_1}$$

Similarly, if $-P_2 = (x_2, y_2+x_2)$ and $P_1 - P_2 = (x_4, y_4)$ then,

$$x_4 = \overline{\lambda}^2 + \overline{\lambda} + x_1 + x_2 + a = \lambda^2 + \frac{x}{(x_1 + x_2)^2} + \lambda + \frac{x_2}{x_1 + x_2} + x_1 + x_2 + a$$

(2)

where

$$\overline{\lambda} = \frac{y_2 + x_2 + y_1}{x_2 + x_1} - \frac{x_2}{x_2 + x_1} + \lambda$$

if we add $x_3$ and $x_4$ then,

$$x_3 + x_4 = \frac{x}{(x_1 + x_2)^2} + \frac{x_2}{x_1 + x_2} = \frac{x_1 x_2}{(x_1 + x_2)^2}$$

(3)

To compute the x-coordinate $x_3$ of $(P_1 + P_2)$ we only need the x-coordinates of $P_1$, $P_2$ and $(P_1 - P_2)$, however the computation is not optimally efficient as it requires inversions. It may also be noted that the y-coordinate is not needed in these calculations.

Referring back to figure 2, the value $kP$ may be calculated using the "double and add" method. Whenever a new pair of points is computed the addition formula of equation (3) above is used and this is done $m$ times.

Thus we have a formula for $x_3$ involving $x_1$, $x_2$ and $x_4$. Unfortunately, this formula includes an inversion, which is costly. We can modify this equation as follows, suppose the values of $x_1$, $x_2$ and $x_3$ are given by $\frac{x_1}{z_1}, \frac{x_2}{z_2}, \frac{x_3}{z_3}$, where $x_1, x_2, x_3 z_1, z_2, z_3$ are values maintained during the double and add algorithm. Then substituting these new representations into formula (3), we find

$$\frac{x_3}{z_3} = x_4 + \frac{\dfrac{x_1 x_2}{z_1 z_2}}{\left(\dfrac{x_1}{z_1} + \dfrac{x_2}{z_2}\right)^2} = x_4 + \frac{x_1 x_2 z_1 z_2}{(x_1 z_2 + x_2 z_1)^2} = \frac{x_4 (x_1 z_2 + x_2 z_1)^2 + x_1 x_2 z_1 z_2}{(x_1 z_2 + x_2 z_1)^2}$$

Therefore, if we take $x_3 = x_4(x_1 z_2 + x_2 z_1)^2 + x_1 x_2 z_1 z_2$, and $z_3 = (x_1 z_2 + x_2 z_1)^2$. We can execute the "double & add" algorithm of figure 3 (using this new representation) and avoid the computation of an inversion for most of the algorithm.

From equations for $x_3$ and $z_3$ above it may be seen that $x_3$ may be calculated by performing at most four multiplication operations.

The sum of the points $P_1$ and $P_2$ expressed in terms of $x_3$ and $z_3$ is obtained without having to perform a relatively costly inversion on the x-coordinate, and can be computed using at most four multiplies and two squares. The remaining operations of addition and squaring are relatively inexpensive with regard to computational power. The computation of the term $(x_1 z_2 + x_2 z_1)^2$ is obtained by a cyclic shift of the normal basis representation of the value within parentheses for which a general-purpose processor can perform relatively easily. At the end of the algorithm we can convert back to our original representation if required.

Referring back to figure 3, now in order to double point P $(x_1, y_1)$, let $2(x_1, y_1) = (x_3, y_3)$ then as before if the equation of the elliptic curve E is given by $y^2 + xy = x^3 + ax^2 + b$ over $F_{2^m}$, the x-coordinate of the point 2P is represented as

$$x_3 = x_1^2 + \frac{b}{x_1^2}.$$

Once again representing the coordinates in terms of the projective coordinates we obtain

$$x_3 = x_1^4 + bz_1^4$$

and

$$z_3 = (x_1 z_1)^2$$

or

$$x_3 = (x_1 \cdot \sqrt[4]{b} z_1)$$

By making b relatively small the computationally expensive operations may be reduced to approximately one multiplication operation for the $z_0$ term. We can precompute $\sqrt[4]{b}$ and calculate $x_3$ according to the last equation, thus requiring two less squares. Alternatively, as mentioned earlier in a normal basis representation the computation of $x_1^4$ and $z_1^4$ is obtained by two cyclic shifts of the representation of the respective values, while $(x_1 z_1)^2$ is obtained by a single cyclic shift of the product.

Applying the earlier outlined "double and add" method of Figure 3, we observe that for a scalar k of m bits and calculation of kP defined over $F_{2^m}$ requires at most (m-1) double and add operations. From the above discussion a double operation on points of an elliptic curve are achieved by performing at most two multiplication operations, while the add operation is achieved by performing at most four multiplication operations. Thus to compute the x-coordinate of kP using the method of this invention would require at most six times (m-1) multiplication operations.

Once the x values have been calculated, as above, y-coordinate values may also be determined. However, for each x-coordinate there exists at most two y-coordinates. For example, in the final step of obtaining a point 24P, both points 23P and P would be known, since 24P may be expressed as 23P + P= 24P. Assume the x-coordinate $x_{23}$ of the point A = 23P have been obtained as described earlier. Then, by substituting $x_{23}$ into the elliptic curve equation E and solving the resulting quadratic equation, two values of y are obtained corresponding to points A = $(x_{23}, y_{23}^{(1)})$ and B = $(x_{23}, y_{23}^{(2)})$. Next, by substitution, the x-coordinate $x_{24}$ obtained through calculating 24P = P + 23 P into the elliptic curve equation will produce two points $(x_{24}, y_{24}^{(1)})$ and $(x_{24}, y_{24}^{(2)})$. The two points thus obtained are stored. Point P is added to the points A and B using ordinary point addition to produce corresponding points A + P = $(x_a, y_a)$ and B + P = $(x_b, y_b)$, respectively. Point $(x_a, y_a)$ is compared to points $(x_{24}, y_{24}^{(1)})$ and $(x_{24}, y_{24}^{(2)})$, respectively. If none of the points match, then $(x_b, y_b)$ is the correct point, otherwise $(x_a, y_a)$ is the correct point. Thus, it may be seen that multiples of a point P may be easily calculated without knowing the y-coordinate and, furthermore, the y-coordinate may be obtained at the end of the calculation, if so desired.

Thus, for example referring back to the ElGamal scheme for elliptic curves one is required to compute $r = kP = (x,y)$. In this case one can drop the y-coordinate and produce a hash of a message m and the x-coordinate e = h(m//x). The sender then sends to a recipient a message including a signature s and the hash e. The signature s has the form s = (de + k) mod n, where d is the private key of the sender and k is a random number generated by the sender. The recipient then verifies the signature by calcutaling sP -eQ = r. Both sP and eQ may be calculated by utilizing the "double and add" method of this invention. The x values of sP and eQ each produce two possible values of y: $(x_1, y_1^{(1)})$, $(x_1, y_1^{(2)})$ and $(x_2, y_2^{(1)})$, $(x_2, y_2^{(2)})$ when substituted back into the elliptic curve equation E. When the point subtraction is performed between permutations of these points, the correct y will thus produce the appropriate matching r. If none of these substitutions produce a matching r, then the signature is not verified.

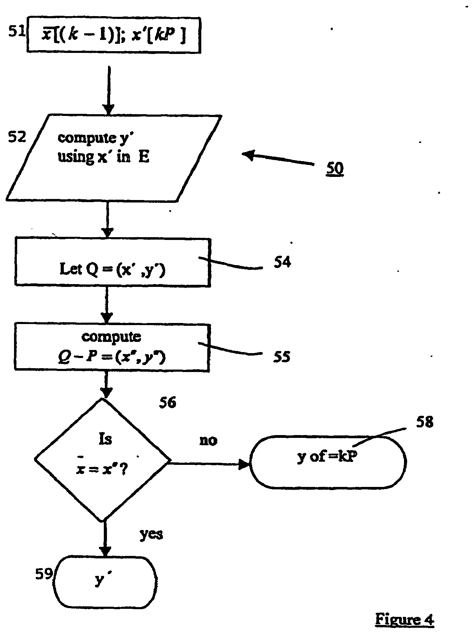

Referring to figure 4, a schematic diagram of a further method for determining the y-coordinate of kP derived according to the method described with respect to figure 3, and given the point P = (x, y) and the x-coordinate $\bar{x}$ of (k-1)P and x' of kP (51) is shown generally by numeral 50. As may be noted with respect to figure 3 in computing the x-coordinate of kP the x-coordinate of (k-1)P is also calculated.

Thus, initially substitute into the elliptic curve equation (52) to obtain a value of y' such that the point (x',y') is on the curve. Next at step 54 assign the point Q to (x',y'). Next complete a point Q-P = (x",y") by simple point subtraction 55. The derived x-coordinate x" is compared to the x-coordinate $\bar{x}$ of (k-1) at step 56 and if x" = $\bar{x}$, then y' is the y-coordinate of kP (59), otherwise y' is the y-coordinate of -kP (58). It may be noted that this method works if 0 < k < order of point P.

Utilizing the method of the subject invention to compute kP it is also possible to compute (k+1)P such that the x-coordinates on kP and (k+1)P are available. In this case the y-coordinate may be derived by computing Q+P = (x", y") and comparing the coordinate x" to the x-coordinate of $(k+1)P$.

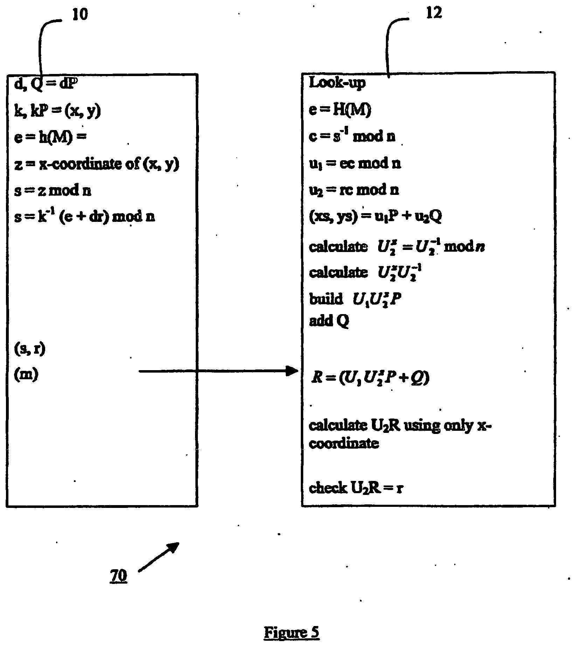

Referring to figure 5, a further application of an embodiment of the invention to verification of elliptic curve signatures is indicated generally by numeral 70. Once again it is assumed that the first correspondent 10 includes a private key random integer $d$ and a corresponding public key $Q$ derived from computing the point $Q = dP$. In order to sign a message $M$, a hash value e is computed from the message $M$ using a hash function $H$. Next, a random integer $k$ is selected as a private session key. A corresponding public session key $kP$ is calculated from the random integer $k$. The first correspondent then represents the x-coordinate of the point $kP$ as an integer z and then calculates a first signature component $r = $ z mod n.

Next, a second signature component $s = k^{-1} (e + dr) \; mod \; n$ is also calculated. The signature components $s$ and $r$ and a message $M$ is then transmitted to the second correspondent 12. In order for the second correspondent 12 to verify the signature $(r,s)$ on $M$, the second correspondent looks up the public key Q of the first correspondent 10. A hash $e'$ of the message $M$ is calculated using the hash function $H$ such that $e' = H(M)$. A value $c = s^{-1} \; mod \; n$ is also calculated. Next, integer values $u_1$ and $u_2$ are calculated such that $u_1 = e'c \; mod \; n$ and u2 = rc mod n. In order that the signature be verified, the value $u_1P + u_2Q$ must be calculated. Since $P$ is known and is a system wide parameter, the value $u_1P$ may be computed quickly using pre-computed multiple of P. For example, these values may be combined from a pre-stored table of doubles of $P$, i.e. $2P$, $4P$, $8P$, etc. On the other hand however, the point $Q$ is current and varies from user to user and, therefore, the value $u_2Q$ may take some time to compute and generally cannot be pre-computed.

However, by resorting to the expedient of the method disclosed in the subject invention, verification of the signature may be significantly accelerated. Normally, the point R = $u_1P + u_2Q$ is computed. The field element x of the point R = (x,y) is converted to an integer z, and a value $v = z \; mod \; n$ is computed. If v = r, then the signature is valid.

Alternatively, a technique which takes advantage of "double & add" to compute u2Q if the modular inverse of $u_2$ is calculated $u_2^* = u_2^{-1}$ mod n, then R can be expressed as $u_2(u_1 u_2^*P + Q)$, i.e. making use of the identity $u_2 u_2^* = 1$. The value $u_1 u_2^*$ is an integer and, therefore, may be easily computed. Thus, the point $u_1 u_2^*P$ may be easily calculated or assembled from the previously stored values of multiples of $P$. The point $Q$ is then added to the point $u_1 u_2^*P$, which is a single addition, to obtain a new point $R'$.

Thus, in order to verify the signatures, the recipient need only to determine the x coordinate of the value $u_2R'$. This calculation may be performed using the "double and add" method as described with reference to figure 3. If this is equal to r, then the signature is verified. The resulting value is the x-coordinate of the point $u_1P + u_2Q$. The value v = x mod n is computed and verified against r. It may be noted that in this scheme, the y-coordinate is not used in signature generation or verification and, hence, computing is not mandatory. However, alternative schemes for both x and y-coordinates may be utilized in these cases and the y coordinate may be derived as described earlier or the two y-coordinates corresponding to the given x-coordinate may be calculated and each used to attempt to verify the signature. Should neither satisfy this comparison, then the signature is invalid. That is, since verification requires computing the point R = $U_1P + U_2Q$. This can be done as follows. Transmit only the x coordinate of Q, compute the x-coordinate of $U_2Q$" by using either the "double & add" of figure 3 or on $E(F_p)$. Try both points corresponding to this x-coordinate to see if either verifies.

Referring back to figure 1 if keys are transferred between the correspondents of the form kP then to reduce the bandwidth it is possible for the sender to transmit only one of the co-ordinates of kP and compute the other co-ordinate at the receiver. For example if the field elements are 155 bits for $F_2{}^{155}$, an identifier, for example a single bit of the correct value of the other co-ordinate, may also be transmitted. This permits the possibilities for the second co-ordinate to be computed by the recipient and the correct one identified from the identifier.

Referring therefore to Figure 1, the transmitter 10 initially retrieves as the public key dP of the receiver 12, a bit string representing the co-ordinate $x_0$ and a single bit of the co-ordinate $y_0$.

The transmitter 10 has the parameter of the curve in register 30 and therefore may use the co-ordinate $x_0$ and the curve parameters to obtain possible values of the other co-ordinate $y_0$ from the arithmetic unit 20.

For a curve of the form $y^2 + xy = x^3 + ax^2 + b$ and a co-ordinate $x_0$, then the possible values $y_1, y_2$ for $y_0$ are the roots of the quadratic $y^2 + x_0y = x_0{}^3 + ax_0{}^2 + b$.

By solving for y, in the arithmetic unit 20 two possible roots will be obtained and comparison with the transmitted bit of information will indicate which of the values is the appropriate value of y.

The two possible values of the second co-ordinate $(y_0)$ differ by $x_0$, i.e. $y_1 = y_2 + x_0$. Since the two values of $y_0$ differ by $x_0$, then $y_1$ and $y_2$ will always differ where a "1" occurs in the representation of $x_0$. Accordingly the additional bit transmitted is selected from one of those positions and examination of the corresponding bit of values of $y_0$, will indicate which of the two roots is the appropriate value.

The receiver 10 thus can generate the co-ordinates of the public key dP even though only 156 bits are retrieved.

Similar efficiencies may be realized in transmitting the session key kP to the receiver 12 as the transmitter 10 need only forward one co-ordinate, $x_0$ and the selected identifying bit of $y_0$. The receiver 12 may then reconstruct the possibles values of $y_0$ and select the appropriate one.

In the field $F_{2m}$ it is not possible to solve for y using the quadratic formula as 2a = 0. Accordingly, other techniques need to be utilised and the arithmetic unit 20 is particularly adapted to perform this efficiently.

In general provided $x_0$ is not zero, if $y = x_0z$ then $x_0^2z^2 + x_0^2z = x_0^3 + ax_0^2 + b$. This may be written as

$$z^2 + z = x_0 + a + \frac{b}{x_0^2} = c.$$

i.e. $z^2 + z = c$.

If m is odd then either $z = c + c^4 + c^{16} + ... + c^{2m-1}$

or $z = 1 + c + ..... \overline{c^{2m-1}}$ to provide two possible values for $y_0$.

A similar solution exists for the case where m is even that also utilises terms of the form $c^{2R}$.

This is particularly suitable for use with a normal basis representation in $F_{2m}$.

As noted above, raising a field element in $F_2^m$ to a power g can be achieved by a g fold cyclic shift where the field element is represented as a normal basis.

Accordingly, each value of z can be computed by shifting and adding and the values of $y_0$ obtained. The correct one of the values is determined by the additional bit transmitted.

The use of a normal basis representation in $F_2^m$ therefore simplifies the protocol used to recover the co-ordinate $y_0$.

If $P = (x_0 \; y_0)$ is a point on the elliptic curve $E : y^2 + xy = x^3 + ax^2 + b$ defined over a field $F_2^m$, then $y_0$ is defined to be 0 if $x_0 = 0$; if $x_0 \neq 0$ then $y_0$ is defined to be the least significant bit of the field element $y_0.x_0^{-1}$.

The x-coordinate $x_0$ of P and the bit $y_0$ are transmitted between the transmitter 10 and receiver 12. Then the y-coordinate $y_0$ can be recovered as follows.

1. If $x_0 = 0$ then $y_0$ is obtained by cyclically shifting the vector representation of the field element b that is stored in parameter register 30 one position to the left. That is, if $b = b_{m-1}b_{m-2}... b_1b_0$ then $y = b_{m-1}.b_1b_0b_m$ 2 If $x_0 \neq 0$ then do the following:

2.1 Compute the field element $c = x_0 + a + bx_0^{-2}$ in $F_2^m$.

2.2 Let the vector representation of c be $c = c_{m-1} \; c_{m-2} ...c_1c_0$

2.3 Construct a field element $z=z_{m-1}z_{m-2}...z_1z_0$ by setting

$$z_0 = y_0,$$

$$z_1 = c_0 \oplus z_0,$$

$$z_2 = c_1 \oplus z_1,$$

$$\vdots$$

$$z_{m-2} = c_{m-1} \oplus z_{m-3},$$

$$z_{m-1} = c_{m-2} \oplus z_{m-2}.$$

2.4 Finally, compute $y_0 = x_0 \cdot z$.

It will be noted that the computation of $x_0^{-2}$ can be readily computed in the arithmetic unit 20 as described above and that the computation of $y_0$ can be obtained from the multiplier 48.

In the above examples, the identification of the appropriate value of $y_0$ has been obtained by transmission of a single bit and a comparison of the values of the roots obtained. However, other indicators may be used to identify the appropriate one of the values and the operation is not restricted to encryption with elliptic curves in the field GF($2^m$). For example, if the field is selected as $Z_p$ $p = 3(mod \; 4)$ then the Legendre symbol associated with the appropriate value could be transmitted to designate the appropriate value. Alternatively, the set of elements in Zp could be subdivided into a pair of subsets with the property that if y is in one subset, then -y is in the other, provided $y \neq 0$. An arbitrary value can then be assigned to respective subsets and transmitted with the co-ordinate $x_0$ to indicate in which subset the appropriate value of $y_0$ is located. Accordingly, the appropriate value of $y_0$ can be determined. Conveniently, it is possible to take an appropriate representation in which the subsets are arranged as intervals to facilitate the identification of the appropriate value of $y_0$. It may be noted that one of the methods described earlier may also be sued to derive the coordinate

These techniques are particularly suitable for encryption utilizing elliptic curves but may also be used with any algebraic curves and have applications in other fields such as error correcting coding where co-ordinates of points on curves have to be transferred.

It will be seen therefore that by utilising an elliptic curve lying in the finite field $GF_2{}^m$ and utilising a normal basis representation, the computations necessary for encryption with elliptic curves may be efficiently performed. Such operations may be implemented in either software or hardware and the structuring of the computations makes the use of a finite field multiplier implemented in hardware particularly efficient.

The present invention is thus generally concerned with an encryption method and system and particularly an elliptic curve encryption method and system in which finite field elements is multiplied by a scalar in a processor efficient manner. The encryption system can comprise any suitable processor unit such as a suitably programmed general-purpose computer.

**Claims**

1. A method of operating an encryption/decryption unit (16) to determine a k-fold multiple kP of a point P on an elliptic curve defined over a finite field of characteristic 2 using points having x and y coordinates, the method steps performed by the encryption/decryption unit comprising;

   a) performing successive double and add operations on a pair of points that differ by P to obtain values of the x coordinates of a pair of points, one of which corresponds to kP, and the other of which corresponds to a point [k-1]P or [k+1]P that differs by P from kP;

   said method **characterised by** the steps of:

   b) substituting the x coordinate, x', of the one point kP into the elliptic curve to determine possible values, y', of the y coordinate of the point kP on the curve;
   c) changing at least one of the possible points having coordinates x', y' representing the one point kP by either adding or subtracting P to said possible point to obtain a changed point having coordinates x", y";
   d) comparing the changed point and said other point [k-1]P or [k+1]P to determine if said points correspond: and
   e) determining as the y coordinate of the one point kP the possible value of y coordinate that provides a changed point that has coordinates that correspond to the other point.

2. A method according to claim 1, wherein step (a) comprises using a bit of k and a pair of points dP and (d+1)P to compute:

   a) a pair of points 2dP, (2d+1)P when said bit is equal to 0; and
   b) a pair of points (2d+1)P, (2d+2)P when said bit is equal to 1.

3. A method according to claim 2, wherein:

   a) said point 2dP is computed by doubling dP, and said point (2d+1)P is computed by adding P to said point 2dP;
   b) said point (2d+1)P is computed by adding dP and (d+1)P and said point (2d+2)P is computed adding P to (2d+1)P.

4. A method according to claim 1, wherein said point P is represented during said double and add operations using projective coordinates.

5. A method according to claim 1, wherein the step of comparing the changed point and said other point comprises comparing the x co-ordinates of said changed point and said other point.

6. A method of verifying a digital signature having signature components r,s where r is obtained from a point multiple kP and s is obtained from a combination of private keys and the signed message, wherein the digital signature verification comprises computing a value sP and a value eQ, computing sP-eQ and checking if sP-eQ=r, said method **characterized by** the steps of:

   a) computing at least one of sP and eQ by using a method according to any one of claims 1 through 5.

**7.** A method of computing elliptic curve digital signatures **characterized by** using a method according to any one of claims 1 through 5 to compute point multiples used in said signature.

**8.** A computing device comprising an encryption/decryption unit (16) adapted to determine a k-fold multiple kP of a point P on an elliptic curve defined over a finite field of characteristic 2 using points having x and y coordinates, the encryption/decryption unit comprising;

a) means for performing successive double and add operations on a pair of points that differ by P to obtain values of the x coordinates of a pair of points, one of which corresponds to kP, and the other of which corresponds to a point [k-1]P or [k+1]P that differs by P from kP;

**characterised by** comprising:

b) means for substituting the x coordinate, x', of the one point kP into the elliptic curve to determine possible values, y', of the y coordinate of the point kP on the curve;
c) means for changing at least one of the possible points having coordinates x', y' representing the one point kP by either adding or subtracting P to said possible point to obtain a changed point having Coordinates x", y";
d) means for comparing the changed point and said other point [k-1]P or [k+1]P to determine if said points correspond: and
e) means for determining as the y coordinate of the one point kP the possible value of y coordinate that provides a changed point that has coordinates that correspond to the other point.

**9.** A computing device (16) according to claim 8 wherein said means for obtaining values of said x co-ordinates operates to use a bit of k and a pair of points dP and (d+1)P to compute:

a) a pair of points 2dP, (2d+1)P when said bit is equal to 0; and
b) a pair of points (2d+1)P; (2d+2)P when said bit is equal to 1.

**10.** A computing device (16) according to claim 9, wherein:

a) said point 2dP is computed by doubling dP, and said point (2d+1)P is computed by adding P to said point 2dP;
b) said point (2d+1)P is computed by adding dP and (d+1)P and said point (2d+2)P is computed by adding P to (2d+1)P.

**11.** A computing device (16) according to claim 8, wherein said point P is represented using projective coordinates.

**12.** A computing device (16) according to claim 8, wherein said means for comparing operates to compare x coordinates of said changed point and said other point.

**13.** A computing device (16) according to claim 8 wherein said computing device comprises:

a) means for obtaining an identifier from the y coordinate of kP;
b) means for utilizing said identifier and the x coordinate of kP to represent kP.

**14.** A computing device (16) according to claim 13, wherein said identifier is a single bit of said y coordinate of kP.

**15.** A computer-program comprising program instructions adapted to execute a method as claimed in any one of claims 1 to 7 when said program is run on a computer..

**Patentansprüche**

**1.** Verfahren zum Betreiben einer Verschlüsselungs/Entschlüsselungseinheit (16), um ein k-faches Vielfaches kP eines Punktes P auf einer elliptischen Kurve zu bestimmen, die über einem endlichen Körper der Charakteristik 2 mittels Punkten mit x- und y- Koordinaten definiert ist, wobei die von der Verschlüsselungs-/Entschlüsselungseinheit durchgeführten Verfahrensschritte die folgenden Schritte umfassen:

a) Durchführen sukzessiver Verdoppelungs- und Additionsoperationen an einem Paar von Punkten, die sich um P unterscheiden, um Werte der x-Koordinaten eines Paars von Punkten zu erhalten, von denen einer kP entspricht und der andere einem Punkt [k-1]P oder [k+1]P entspricht, der sich von P um kP unterscheidet;

wobei das Verfahren durch die folgenden Schritte gekennzeichnet ist:

b) Einsetzen der x-Koordinate, x', des einen Punktes kP in die elliptische Kurve, um mögliche Werte, y', der y-Koordinate des Punktes kP auf der Kurve zu bestimmen;
c) Ändern zumindest eines der möglichen Punkte mit Koordinaten x', y', der den einen Punkt kP darstellt, entweder durch Addieren oder Subtrahieren von P zu bzw. von dem möglichen Punkt, um einen geänderten Punkt mit Koordinaten x", y" zu erhalten;
d) Vergleichen des geänderten Punktes und des anderen Punktes [k-1]P oder [k+1]P, um zu bestimmen, ob diese Punkte einander entsprechen; und
e) Bestimmen, als die y-Koordinate des einen Punktes k+P, des möglichen Werts der y-Koordinate, der zu einem geänderten Punkt führt, dessen Koordinaten dem anderen Punkt entsprechen.

2. Verfahren nach Anspruch 1, wobei Schritt a) das Verwenden eines Bits von k und eines Paars von Punkten dP und (d+1)P zum Berechnen des Folgenden umfasst:

a) eines Paars von Punkten 2dP, (2d+1)P, wenn das Bit gleich 0 ist; und
b) eines Paars von Punkten (2d+1)P, (2d+2)P, wenn das Bit gleich 1 ist.

3. Verfahren nach Anspruch 2, wobei:

a) der Punkt 2dP durch Verdoppeln von dP und der Punkt (2d+1)P durch Addieren von P zum Punkt 2dP berechnet werden;
b) der Punkt (2d+1)P durch Addieren von dP und (d+1)$_P$ und der Punkt (2d+2)P durch Addieren von P zu (2d+1)P berechnet werden.

4. Verfahren nach Anspruch 1, wobei der Punkt P während der Verdoppelungs- und Additionsoperationen unter Verwendung von projektiven Koordinaten dargestellt wird.

5. Verfahren nach Anspruch 1, wobei das Vergleichen des geänderten Punktes und des anderen Punktes das Vergleichen der x-Koordinaten des geänderten Punktes und des anderen Punktes umfasst.

6. Verfahren zum Verifizieren einer digitalen Signatur mit Signaturkomponenten r, s, wobei r aus einem Punktvielfachen kP und s aus einer Kombination von privaten Schlüsseln und der signierten Nachricht erhalten werden, wobei die Verifikation der digitalen Signatur das Berechnen eines Wertes sP und eines Wertes eQ, das Berechnen von sP-eQ und das Überprüfen, ob sP-eQ=r, umfasst, wobei das Verfahren durch die folgenden Schritte gekennzeichnet ist:

a) Berechnen zumindest eines von sP und eQ unter Verwendung eines Verfahrens nach einem der Ansprüche 1 bis 5.

7. Verfahren zum Berechnen von auf elliptischen Kurven basierenden digitalen Signaturen, **gekennzeichnet durch** die Verwendung eines Verfahrens nach einem der Ansprüche 1 bis 5, um in der Signatur verwendete Punktvielfache zu berechnen.

8. Berechnungsvorrichtung, umfassend eine Verschlüsselungs/Entschlüsselungseinheit (16), die dazu ausgelegt ist, ein k-faches Vielfaches kP eines Punktes P auf einer elliptischen Kurve zu bestimmen, die über einem endlichen Körper der Charakteristik 2 mittels Punkten mit x- und y-Koordinaten definiert ist, wobei die Verschlüsselungs-/Entschlüsselungseinheit umfasst:

a) eine Einrichtung zum Durchführen sukzessiver Verdoppelungs- und Additionsoperationen an einem Paar von Punkten, die sich voneinander um P unterscheiden, um Werte der x-Koordinaten eines Paars von Punkten zu erhalten, von denen einer kP entspricht und der andere einem Punkt [k-1]P oder [k+1]P entspricht, der sich von kP um P unterscheidet;
**gekennzeichnet dadurch, dass** die Verschlüsselungs/Entschlüsselungseinheit umfasst:
b) eine Einrichtung zum Einsetzen der x-Koordinate, x', des einen Punktes kP in die elliptische Kurve, um mögliche Werte, y', der y-Koordinate des Punktes kP auf der Kurve zu bestimmen;

c) eine Einrichtung zum Ändern mindestens eines der möglichen Punkte mit Koordinaten x', y', die den einen Punkt kP darstellen, entweder durch Addieren oder Subtrahieren von P zu oder von dem möglichen Punkt, um einen geänderten Punkt mit Koordinaten x", y" zu erhalten;

d) eine Einrichtung zum Vergleichen des geänderten Punktes und des anderen Punktes [k-1]P oder [k+1]P, um zu bestimmen, ob die Punkte einander entsprechen; und

e) eine Einrichtung zum Bestimmen, als die y-Koordinate des einen Punktes kP, des möglichen Werts der y-Koordinate, der zu einem geänderten Punkt führt, der Koordinaten aufweist, die dem anderen Punkt entsprechen.

9. Berechnungsvorrichtung (16) nach Anspruch 8, wobei die Einrichtung zum Erhalten von Werten der x-Koordinaten so eingerichtet ist, dass sie ein Bit von k sowie ein Paar von Punkten dP und (d+1)P verwendet, um Folgendes zu berechnen:

a) ein Paar von Punkten 2dP, (2d+1)P, wenn das Bit gleich 0 ist; und

b) ein Paar von Punkten (2d+1)P, (2d+2)P, wenn das Bit gleich 1 ist.

10. Berechnungsvorrichtung (16) nach Anspruch 9, wobei:

a) der Punkt 2dP durch Verdoppeln von dP und der Punkt (2d+1)P durch Addieren von P zum Punkt 2dP berechnet werden;

b) der Punkt (2d+1)P durch Addieren von dP und (d+1)P und der Punkt (2d+2)P durch Addieren von P zu (2d+1)P berechnet werden.

11. Berechnungsvorrichtung (16) nach Anspruch 8, wobei der Punkt P mittels projektiver Koordinaten dargestellt wird.

12. Berechnungsvorrichtung (16) nach Anspruch 8, wobei die Einrichtung zum Vergleichen so eingerichtet ist, dass sie x- Koordinaten des geänderten Punktes und des anderen Punktes vergleicht.

13. Berechnungsvorrichtung (16) nach Anspruch 8, wobei die Berechnungsvorrichtung umfasst:

a) eine Einrichtung zum Erhalten einer Identifikation aus der y-Koordinate von kP;

b) eine Einrichtung zum Verwenden der Identifikation und der y-Koordinate von kP, um kP darzustellen.

14. Berechnungsvorrichtung (16) nach Anspruch 13, wobei die Identifikation ein einzelnes Bit der y-Koordinate von kP ist.

15. Computerprogramm, umfassend Programmanweisungen, die dazu ausgelegt sind, ein Verfahren nach einem der Ansprüche 1 bis 7 auszuführen, wenn das Programm auf einem Computer abläuft.

## Revendications

1. Procédé de mise en oeuvre d'une unité de cryptage/décryptage (16) pour déterminer un multiple kP de k fois un point P sur une courbe elliptique définie sur un champ fini de caractéristique 2 utilisant des points ayant des coordonnées x et y, les étapes du procédé effectuées par l'unité de cryptage/décryptage comprenant :

a) l'exécution d'opérations successives de doublement et d'addition sur une paire de points qui diffèrent de P pour obtenir des valeurs x de coordonnées d'une paire de points dont le premier correspond à kP et dont l'autre correspond à un point [k-1]P ou [k+1]P qui diffère de P de kP ;

ledit procédé étant **caractérisé par** les étapes qui consistent :

b) à substituer la valeur x' à la valeur x de coordonnées du premier point kP dans la courbe elliptique pour déterminer des valeurs possibles, y', de la valeur y de coordonnées du point kP sur la courbe ;

c) à changer au moins l'un des points possibles ayant des coordonnées x', y' représentant le premier point kP en additionnant P audit point possible, ou en en soustrayant, P pour obtenir un point changé ayant des coordonnées x", y" ;

d) à comparer le point changé et ledit autre point [k-1]P ou [k+1]P pour déterminer si lesdits points correspondent ; et

e) à déterminer en tant que valeur y de coordonnées du premier point kP la valeur possible de coordonnées y qui donne un point changé ayant des coordonnées qui correspondent à l'autre point.

**2.** Procédé selon la revendication 1, dans lequel l'étape a) comprend l'utilisation d'un bit de k et d'une paire de points dP et (d+1)P pour calculer :

  a) une paire de points 2dP, (2d+1)P lorsque ledit bit est égal à 0 ; et
  b) une paire de points (2d+1)P, (2d+2)P lorsque ledit bit est égal à 1.

**3.** Procédé selon la revendication 2, dans lequel :

  a) ledit point 2dP est calculé en doublant dP, et ledit point (2d+1)P est calculé en additionnant P audit point 2dP ;
  b) ledit point (2d+1) P est calculé en additionnant dP et (d+1)$_P$ et ledit point (2d+2)P est calculé en additionnant P à (2d+1)P.

**4.** Procédé selon la revendication 1, dans lequel ledit point P est représenté pendant lesdites opérations de doublement et d'addition en utilisant des coordonnées projectives.

**5.** Procédé selon la revendication 1, dans lequel l'étape de comparaison du point changé et dudit autre point comprend la comparaison des coordonnées x dudit point changé et dudit autre point.

**6.** Procédé de vérification d'une signature numérique ayant des composantes de signature r, s où r est obtenu à partir d'un multiple kP d'un point et s est obtenu à partir d'une combinaison de clés privées et du message signé, dans lequel la vérification de signature numérique comprend le calcul d'une valeur sP et d'une valeur eQ, le calcul de sP-eQ et le fait de vérifier si sP-eQ = r, ledit procédé étant **caractérisé par** les étapes qui consistent :

  a) à calculer au moins l'un de sP et eQ en utilisant un procédé selon l'une quelconque des revendications 1 à 5.

**7.** Procédé de calcul de signature numérique d'une courbe elliptique, **caractérisé par** l'utilisation d'un procédé selon l'une quelconque des revendications 1 à 5, pour calculer des points multiples utilisés dans ladite signature.

**8.** Dispositif de calcul comportant une unité de cryptage/décryptage (16) conçue pour déterminer un multiple kP de k fois un point P sur une courbe elliptique définie sur un champ fini de caractéristique 2 utilisant des points ayant des coordonnées x et y, l'unité de cryptage/décryptage comportant :

  a) des moyens destinés à former des opérations successives de doublement et d'addition sur une paire de points qui diffèrent de P pour obtenir des valeurs x des coordonnées d'une paire de points, dont une première correspond à kP et dont l'autre correspond à un point [k-1]P ou [k+1]P qui diffère de P de kP ;

  **caractérisé en ce qu'**il comporte :

  b) des moyens destinés à substituer x' de la valeur x de coordonnées du premier point kP dans la courbe elliptique pour déterminer des valeurs possibles, y', de la valeur y de coordonnées du point kP sur la courbe ;
  c) des moyens destinés à changer au moins l'un des points possibles ayant des valeurs de coordonnées x', y' représentant le premier point kP en additionnant P audit point possible ou en en soustrayant P afin d'obtenir un point changé ayant des coordonnées x", y" ;
  d) des moyens destinés à comparer le point changé et ledit autre point [k-1]P ou [k+1]P pour déterminer si lesdits points correspondent ; et
  e) des moyens destinés à déterminer en tant que la valeur y de coordonnées du premier point kP, la valeur possible y de coordonnées qui donne un point changé qui a des coordonnées qui correspondent à l'autre point.

**9.** Dispositif de calcul (16) selon la revendication 8, dans lequel lesdits moyens destinés à obtenir des valeurs desdites coordonnées x fonctionnent en utilisant un bit de k et une paire de points dP et (d+1)$_P$ pour calculer :

  a) une paire de points 2dP, (2d+1)P lorsque ledit bit est égal à 0 ; et
  b) une paire de points (2d+1)P, (2d+2)P lorsque ledit bit est égal à 1.

**10.** Dispositif de calcul (16) selon la revendication 9, dans lequel :

a) ledit point 2dP est calculé en doublant dP, et ledit point (2d+1)P est calculé en additionnant P audit point 2dP ;
b) ledit point (2d+1) P est calculé en additionnant dP et (d+1)$_P$ et ledit point (2d+2)P est calculé en additionnant P à (2d+1)P.

**11.** Dispositif de calcul (16) selon la revendication 8, dans lequel ledit point P est représenté en utilisant des coordonnées projectives.

**12.** Dispositif de calcul (16) selon la revendication 8, dans lequel lesdits moyens de comparaison fonctionnent de manière à comparer des coordonnées x dudit point changé et dudit autre point.

**13.** Dispositif de calcul (16) selon la revendication 8, lequel dispositif de calcul comporte :

a) des moyens destinés à obtenir un identificateur à partir de la valeur y de coordonnées de kP ;
b) des moyens destinés à utiliser ledit identificateur et ladite valeur x de coordonnées de kP pour représenter kP.

**14.** Dispositif de calcul (16) selon la revendication 13, dans lequel ledit identificateur est un bit unique de ladite valeur y de coordonnées de kP.

**15.** Programme d'ordinateur comportant des instructions de programme conçues pour exécuter un procédé selon l'une quelconque des revendications 1 à 7 lorsque ledit programme est mis en oeuvre sur un ordinateur.

FIG. 1

FIG. 2

$$k, P$$

$$k = (k_1, k_2, k_3, \ldots, k_m)_2$$

$$P_1 = P, P_2 = 2P$$

for $i = 2$ to m  do

if $k_i = 1$

if $k_i = 0$

$$P_1 = P_1 + P_2$$
$$P_2 = P_1 + P$$

$$P_1 = 2P_1$$
$$P_2 = P_1 + P$$

$$P_1 = kP$$

$$P_2 = (k + 1)P$$

**Figure 3**

Figure 4

10

12

$d, Q = dP$

$k, kP = (x, y)$

$e = h(M) =$

$z = $ x-coordinate of $(x, y)$

$s = z \bmod n$

$s = k^{-1}(e + dr) \bmod n$

$(s, r)$

$(m)$

Look-up

$e = H(M)$

$c = s^{-1} \bmod n$

$u_1 = ec \bmod n$

$u_2 = rc \bmod n$

$(xs, ys) = u_1 P + u_2 Q$

calculate $U_2^x = U_2^{-1} \bmod n$

calculate $U_2^x U_2^{-1}$

build $U_1 U_2^x P$

add $Q$

$R = (U, U_2^x P + Q)$

calculate $U_2 R$ using only x-coordinate

check $U_2 R = r$

<u>70</u>

<u>Figure 5</u>

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9604602 A

**Non-patent literature cited in the description**

- **VANSTONE et al.** Elliptic Curve Cryptosystems and Their Implementation. *The Journal of Cryptology,* 1993, vol. 6 (4), 209-224

- *IEEE Journal on Selected Areas in Communications,* 01 June 1993, vol. 11 (5), 804-813